# EUROPEAN PATENT APPLICATION

(11) **EP 4 737 600 A1**
(43) Date of publication of application: **06.05.2026**
(21) Application number: 24831792.7
(22) Date of filing: 19.06.2024
(51) Int. Cl.: C22C 14/00, B22F 1/00, B22F 1/10, B22F 1/14, C22C 38/00, C22F 1/00, C22F 1/18, F17C 11/00

(54) **HYDROGEN STORAGE MATERIAL, HYDROGEN STORAGE CONTAINER, AND HYDROGEN SUPPLY DEVICE**

(30) Priority: 27.06.2023 JP 2023104739
(71) Applicant: Santoku Corporation, Kobe-shi, Hyogo 658-0013 (JP)
(72) Inventor: OTSUKI, Takayuki, Kobe-shi, Hyogo 658-0013 (JP); HAYASHI, Hiroki, Kobe-shi, Hyogo 658-0013 (JP); KAWAGUCHI, Yasuhiko, Kobe-shi, Hyogo 658-0013 (JP); NISHIMOTO, Masakazu, Kobe-shi, Hyogo 658-0013 (JP); HATANAKA, Hiroshi, Kobe-shi, Hyogo 658-0013 (JP)
(74) Representative: Kraus & Lederer PartGmbB
(86) International application number: PCT/JP2024/022216
(87) International publication number: WO 2025/004930

(57) **Abstract**

Provided is a hydrogen storage material comprising a TiFe-based alloy having excellent durability, good initial activation, and sufficient amount of hydrogen stored and hydrogen absorption/desorption characteristics. Also provided are a hydrogen storage container including the hydrogen storage material and a hydrogen supply apparatus including the hydrogen storage container. There are provided a hydrogen storage material comprising an alloy having a specific elemental composition represented by Formula (1), wherein, in a 1000 times magnified COMP image of a cross section obtained by EPMA, 10 or more and 3000 or less La-enriched phases having a size of 0.1 µm or more and 10 µm or less are present in a field of view of 85 µm × 120 µm, a hydrogen storage container including the hydrogen storage material, and a hydrogen supply apparatus including the hydrogen storage container.
[Chem. 1]

Ti_{(1-a-b)}LaₐM1_{b}Fe_{c}Mn_{d}M2ₑC_{f} (1)

## Description

### TECHNICAL FIELD

The present invention relates to a hydrogen storage material, a hydrogen storage container, and a hydrogen supply apparatus.

### BACKGROUND ART

A hydrogen storage alloy is an alloy capable of reversibly absorbing and desorbing hydrogen, and has already been used as a negative electrode material of a nickel-metal hydride secondary battery, and is also expected as a material capable of safely storing hydrogen, which is attracting attention as an energy source these days, and is being put into practical use for hydrogen storage/supply systems. There are various hydrogen storage alloys such as an ABS-based type, an AB2-based type, a TiFe-based type, and a BCC-based type such as TiVCr; among these, a TiFe-based alloy is a material that is made of the most inexpensive source materials and is most expected as hydrogen storage use in which a much larger amount than the amount used for a battery is needed.

However, the TiFe-based alloy is a difficult-to-use alloy type because the activation is not easy and the initial activation needs application of a temperature of 400°C or higher and a pressure of 3 MPa or more. It is known that various additive elements are effective for the improvement; for example, technologies shown in the following patent literatures are known.

Patent Literature 1 discloses a titanium-based hydrogen storage alloy represented by the formula Ti₁₊ₖFe₁₋ₗMn₁Aₘ (where 0 ≤ k ≤ 0.3, 0 < 1 ≤ 0.3, 0 < m ≤ 0.1, and A is an element composed of at least one of niobium and the rare earth elements). Patent Literature 1 further discloses that an alloy that is easy to activate and has a sufficient amount of hydrogen stored is obtained by adding Mn and an A element (at least one of Nb and the rare earth elements) to a TiFe alloy.

Patent Literature 2 discloses a hydrogen storage alloy made of an alloy having a composition represented by the general formula (T₁₋ₐFeₐ)_{100-b-c-d}La_{b}M_{c}M'_{d} (where T is at least one element selected from Ti, Zr, and Hf, M is at least one element selected from V, Nb, Ta, Cr, Mo, and W, M' is at least one element selected from Mn, Co, Ni, Cu, Zn, B, Al, Ge, and Sn, a is 0.45 ≤ a ≤ 0.55 in terms of atomic ratio, and b, c, and d are 0.01 ≤ b ≤ 10, 0 ≤ c ≤ 20, and 0 ≤ d ≤ 30 in terms of atomic%, respectively), in which minute pieces of a crystalline phase having a crystal grain size of 10 µm or less are precipitated in at least part of the alloy structure. Patent Literature 2 further discloses that a hydrogen storage alloy excellent in hydrogen storage characteristics and corrosion resistance is obtained by appropriately setting the kinds of the elements constituting the T component, Fe, the La component, the M component, and the M' component in the general formula and the composition ratio of each component and, after cooling and solidification, performing heat treatment to precipitate minute pieces of a crystalline phase.

Patent Literature 3 discloses a hydrogen storage alloy made of an alloy having a composition represented by the general formula AₐT_{b}M_{c}M'_{d} (where A is at least one element selected from Ti, Zr, Hf, and V, T is at least one element selected from Ni, Co, Fe, Cu, Mn, and Cr, M is at least one element selected from Al, Si, Ga, Ge, Zn, Sn, In, and Sb, M' is at least one element selected from B, C, N, and P, and a, b, c, and d are 20 ≤ a ≤ 70, 30 ≤ b ≤ 60, 5 ≤ c ≤ 40, 0.1 ≤ d ≤ 10, and a + b + c + d = 100 in terms of atomic%), in which minute pieces of a crystalline phase having a crystal grain size of 10 µm or less are precipitated in at least part of the alloy structure. Patent Literature 3 further discloses that a hydrogen storage alloy excellent in hydrogen storage characteristics and corrosion resistance is obtained by appropriately setting the kinds of the elements constituting the A component, the T component, the M component, and the M' component in the general formula and the composition ratio of each component and, after cooling and solidification, performing heat treatment to precipitate minute pieces of a crystalline phase.

### CITATION LIST

### PATENT LITERATURE

Patent Literature 1: JP S61-250136 A
Patent Literature 2: JP H10-265875 A
Patent Literature 3: JP H10-265888 A

### SUMMARY OF INVENTION

### TECHNICAL PROBLEM

The addition of the rare earth element described in Patent Literature 1 and Patent Literature 2 is effective in improving the initial activation, increasing the amount of hydrogen stored, increasing the equilibrium pressure during hydrogen absorption and desorption, eliminating the two-stage plateau, and the like, however, the excessive addition of the rare earth element causes an increase in the oxygen content of the alloy, leading to deterioration of durability. Therefore, an object of the present invention is to provide a hydrogen storage material having a TiFe-based alloy which is excellent in durability, has good initial activation, and exhibits a sufficient amount of hydrogen stored and hydrogen absorption/desorption characteristics while suppressing the addition amount of a rare earth element. Another object of the present invention is to provide a hydrogen storage container including the hydrogen storage material and a hydrogen supply apparatus including the hydrogen storage container.

### SOLUTION TO PROBLEM

As a result of extensive studies to achieve the above objects, the present inventors have found an alloy having a specific elemental composition containing Ti, La, and Fe, and have completed the present invention.

That is, according to the present invention, there is provided a hydrogen storage material comprising an alloy of an elemental composition represented by Formula (1) below, wherein, in a 1000 times magnified COMP image of a cross section of the alloy obtained by EPMA, 10 or more and 3000 or less pieces of a phase in which a rare earth element (La in the alloy of the present invention) is enriched, having a phase size of 0.1 µm or more and 10 µm or less, are present in a field of view of 85 µm × 120 µm of the COMP image,
[Chem. 1]

Ti_{(1-a-b)}LaₐM1_{b}Fe_{c}Mn_{d}M2ₑC_{f} (1)

wherein M1 represents at least one selected from the group consisting of V, Zr, Nb, and Ta, and M2 represents at least one selected from transition metal elements (excluding rare earth elements, M1, Ti, Fe, and Mn), Al, B, Ga, Si, and Sn; here, the rare earth elements include Sc and Y; and a is 0.0011 ≤ a ≤ 0.016, b is 0 ≤ b ≤ 0.20, c is 0.40 ≤ c ≤ 1.15, d is 0 ≤ d ≤ 0.40, e is 0 ≤ e ≤ 0.20, f is 0 ≤ f ≤ 0.07, and c + d + e is 0.60 ≤ c + d + e ≤ 1.20.

According to another aspect of the present invention, there are provided a hydrogen storage container including the hydrogen storage material and a hydrogen supply apparatus including the hydrogen storage container.

### ADVANTAGEOUS EFFECTS OF INVENTION

The hydrogen storage material of the present invention contains an alloy of the above specific elemental composition, and therefore is excellent in durability, has good initial activation, and exhibits a sufficient amount of hydrogen stored and hydrogen absorption/desorption characteristics, and can be suitably used for hydrogen storage.

### BRIEF DESCRIPTION OF THE DRAWINGS

Fig. 1 is a view showing a COMP image photograph of a cross section of an alloy cast piece after heat treatment of Example 1.
Fig. 2 is a view showing a COMP image photograph of a cross section of an alloy cast piece after heat treatment of Comparative Example 1.
Fig. 3 is a view showing a COMP image photograph of a cross section of an alloy cast piece after heat treatment of Comparative Example 3.
Fig. 4 shows hydrogen pressure-composition isotherm diagrams (PCT curves) at 30°C of an alloy powder of Example 1 and an alloy powder of Comparative Example 1.

### DESCRIPTION OF EMBODIMENTS

Hereinbelow, the present invention is described in detail. A hydrogen storage material of the present invention is a material comprising an alloy of an elemental composition represented by Formula (1) below. The hydrogen storage material is preferably a material made of the alloy.
[Chem. 2]

Ti_{(1-a-b)}LaₐM1_{b}Fe_{c}Mn_{d}M2ₑC_{f} (1)

In Formula (1), M1 represents at least one selected from the group consisting of V, Zr, Nb, and Ta, and M2 represents at least one selected from transition metal elements (excluding rare earth elements, M1, Ti, Fe, and Mn), Al, B, Ga, Si, and Sn; here, the rare earth elements include Sc and Y; and a is 0.0011 ≤ a ≤ 0.016, b is 0 ≤ b ≤ 0.20, c is 0.40 ≤ c ≤ 1.15, d is 0 ≤ d ≤ 0.40, e is 0 ≤ e ≤ 0.20, f is 0 ≤ f ≤ 0.07, and c + d + e is 0.60 ≤ c + d + e ≤ 1.20.

In Formula (1), a, b, c, d, e, and f are the content ratios of the respective elements expressed in molar ratio, and details are as follows. Hereinafter, the content ratio may be referred to as a "content" or an "amount".

La in Formula (1) is effective in improving the initial activation, increasing the amount of hydrogen stored, increasing the equilibrium pressure during hydrogen absorption and desorption, and eliminating two-stage plateaus in the PCT curve. "a" representing the La content in Formula (1) is 0.0011 ≤ a ≤ 0.016, preferably 0.0015 ≤ a ≤ 0.014, and more preferably 0.0020 ≤ a ≤ 0.012.

M1 in Formula (1) is at least one selected from the group consisting of V, Zr, Nb, and Ta. M1 is not necessarily required, but is an element mainly contributing to adjustment of various characteristics. For example, an effect of improvement of the initial activation is provided by formation of intermetallic compounds between M1 and the main constituent elements such as Ti, Mn, Fe. Therefore, the M1 element may be incorporated when fine adjustment of characteristics is required depending on the use conditions during hydrogen storage. "b" representing the M1 content in Formula (1) is 0 ≤ b ≤ 0.20, preferably 0 ≤ b ≤ 0.05.

"c" in Formula (1) represents the Fe content. "c" is 0.40 ≤ c ≤ 1.15, preferably 0.50 ≤ c ≤ 0.95, and more preferably 0.65 ≤ c ≤ 0.95. If the amount of Fe in the TiFe-based alloy is large and c is more than 1.15, initial activation is difficult, and a sufficient amount of hydrogen stored may be impossible to obtain in use as a hydrogen storage material. If the amount of Fe in the TiFe-based alloy is small and c is less than 0.40, the amount of hydrogen stored is reduced and the equilibrium pressure of hydrogen absorption and desorption becomes too low, so the material may not function effectively as a hydrogen storage material.

"d" in Formula (1) represents the Mn content. "d" is 0 ≤ d ≤ 0.40, preferably 0.02 ≤ d ≤ 0.40, more preferably 0.04 ≤ d < 0.40, and particularly preferably 0.07 ≤ d ≤ 0.40. When the amount of Mn in the TiFe-based alloy is large and d exceeds 0.40, the equilibrium pressure of hydrogen absorption and desorption becomes too low, so hydrogen may be impossible to effectively extracted from the material when used as a hydrogen storage material. When the amount of Mn in the TiFe-based alloy is small, it has been the case that the initial activation is difficult, consequently a sufficient amount of hydrogen stored may be impossible to obtain as a hydrogen storage material or huge amounts of labor and time may be required for the initial activation, so practicality is lacking; however, in the present application, even when d is 0, initial activation and an amount of hydrogen stored that can withstand practical use can be obtained.

M2 in Formula (1) represents at least one selected from the transition metal elements (excluding the rare earth elements, M1, Ti, Fe, and Mn), Al, B, Ga, Si, and Sn. M2 is preferably at least one selected from Co, Ni, Cu, Cr, Al, B, Ga, Si, and Sn. M2 is not necessarily required, but is an element mainly contributing to adjustment of various characteristics. For example, M2 may be incorporated when fine adjustment of characteristics is required depending on the use conditions during hydrogen storage. "e" representing the M2 content in Formula (1) is 0 ≤ e ≤ 0.20, preferably 0 ≤ e ≤ 0.10.

"f" in Formula (1) represents the C (carbon) content. "f" is 0 ≤ f ≤ 0.07, preferably 0.001 ≤ f ≤ 0.05, and more preferably 0.001 ≤ f ≤ 0.04. C is effective in increasing the equilibrium pressure during hydrogen absorption and desorption and eliminating two-stage plateaus in the PCT curve.

Both La and C in Formula (1) are, as described above, elements effective in increasing the equilibrium pressure during hydrogen absorption and desorption and eliminating two-stage plateaus in the PCT curve, and higher effects are obtained by combining both. In Formula (1), it is preferable that f be 0.001 ≤ f, and a + f be 0.002 ≤ a + f ≤ 0.05.

In Formula (1), c + d + e represents the total content of Fe, Mn, and M2. This value affects the activation and the equilibrium pressure of the hydrogen storage material of the present invention, so an alloy that is easy to initially activate while keeping the equilibrium pressure required for hydrogen storage can be obtained by adjusting this value to the following range. c + d + e is 0.60 ≤ c + d + e ≤ 1.20, preferably 0.65 ≤ c + d + e ≤ 1.15, and more preferably 0.70 ≤ c + d + e ≤ 1.10.

The elemental composition of the alloy of the present invention represented by Formula (1) above can be examined by quantitative analysis with an ICP (inductively coupled plasma) analysis apparatus. In the present specification, the alloy of the present invention refers to, unless otherwise specified, an alloy of an elemental composition represented by Formula (1).

The alloy of the present invention has the following structural feature. Specifically, in a 1000 times magnified COMP image of the alloy cross section obtained by EPMA (electron probe micro analyzer), a phase in which a rare earth element (La in the alloy of the present invention) is enriched (hereinafter sometimes referred to as an R-enriched phase) is in a specific size range, and has the following feature. That is, it has a feature that 10 or more and 3000 or less pieces of the R-enriched phase having a phase size of 0.1 µm or more and 10 µm or less are present in a field of view of 85 µm × 120 µm of the COMP image. Here, the COMP image is an image displayed with a contrast depending on an atomic number, and is also called a backscattered electron compositional image.

Here, the cross section of the alloy refers to a cross section formed by embedding the alloy in a room-temperature curable resin (for example, an epoxy resin), followed by curing, then performing rough polishing and fine polishing using a wet polishing machine, and finally polishing to a mirror-like finish. The size of the alloy when forming a cross section is not particularly limited; for example, an alloy thin piece of about 1 cm square or an alloy cast piece of about 1 cm³ may be used.

In the observation of the cross section thus formed, the alloy of the present invention forms a sea-island structure in which a plurality of pieces of the R-enriched phase are present in the main phase of the TiFe-based alloy. By virtue of the fact that pieces of the R-enriched phase, which are islands, are dispersed in the main phase of the TiFe-based alloy, which is the sea, in the above manner, although a detailed mechanism is not clear, good initial activation as a hydrogen storage material is exhibited, and repeatable absorption and desorption of hydrogen can be performed efficiently and favorably. Each element in the main phase and the R-enriched phase can be observed with elemental mapping obtained by EPMA surface analysis.

When the alloy of the present invention is pulverized and sized to 300 µm to 500 µm, the oxygen content of the powder is preferably 500 ppm or less, and more preferably 400 ppm or less. Here, "the oxygen content" refers to an O content, and hereinafter, "the oxygen content" refers to an O content in all cases. The "O content" is the total amount of oxygen, expressed as the amount of oxygen atoms, contained in the alloy powder including oxygen and oxygen compounds. A low oxygen content of the alloy indicates that oxidation with surrounding impurities (such as O₂) is less likely to occur. Therefore, a lower oxygen content makes deterioration of the alloy during repeated hydrogen absorption and desorption less likely, and thus the alloy exhibits excellent durability.

Preferably, after the alloy of the present invention has been sized to 300 µm to 500 µm and subjected to initial activation treatment, the oxygen content in alloy powder having a particle size of 150 µm or less, which is generated by pulverization resulting from the activation, is 6000 ppm or less, and more preferably 5500 ppm or less. The initial activation treatment is a process that moderately pulverizes the alloy by hydrogen absorption and desorption and creates an active surface on the alloy for reaction with hydrogen, but on the other hand, the pulverization of the alloy brings about an increase in oxygen content and also leads to deterioration of the alloy. Therefore, it can be said that an alloy having a smaller oxygen content even after pulverization when the initial activation treatment is performed is more excellent in durability and more suitable as a hydrogen storage material. The proportion of the alloy powder of 150 µm or less after the initial activation treatment is preferably 5 wt% or more with respect to the amount of the alloy used for the initial activation treatment. At this time, it can be said that the alloy is in a state of being able to perform sufficient absorption and desorption of hydrogen as a hydrogen storage material, that is, initial activation is good.

In the alloy of the present invention, in the hydrogen pressure-composition isotherm diagram (PCT curve) at 30°C, it is preferable that the hydrogen absorption pressure Pₐ₁ at 0.3 wt% hydrogen and the hydrogen absorption pressure Pₐ₂ at 1.3 wt% hydrogen satisfy the following relation: 0 ≤ log₁₀(Pₐ₂) - log₁₀(Pₐ₁) ≤ 0.65, and the hydrogen desorption pressure P_{b1} at 0.3 wt% hydrogen and the hydrogen desorption pressure P_{b2} at 1.3 wt% hydrogen satisfy the following relation: 0 ≤ log₁₀(P_{b2}) - log₁₀(P_{b1}) ≤ 0.80. This is because, when the PCT curve has the above characteristics, it becomes easier to perform hydrogen absorption and desorption, and a very suitable hydrogen storage material can be obtained.

The relationship between the above two expressions is used as an index of "plateau flatness", and the former is used as an index of "plateau flatness during hydrogen absorption" and the latter is used as an index of "plateau flatness during hydrogen desorption".

In the absorption curve of the PCT curve, when the relationship of the hydrogen absorption pressure satisfies the above expression, a desired amount of hydrogen absorbed can be easily reached in a relatively short time. Similarly, in the desorption curve of the PCT curve, since the relationship of the hydrogen desorption pressure satisfies the above relation, it is easier to maintain the required hydrogen pressure at the hydrogen supply destination and to maximize the practically usable hydrogen amount.

P_{b1} is preferably 0.01 MPa or more, more preferably 0.03 MPa or more, and particularly preferably 0.05 MPa or more. This is because hydrogen desorption in a temperature range from room temperature to 95°C is further improved. The upper limit of P_{b1} is not particularly limited, but is substantially about 1.00 MPa.

In addition, in the alloy of the present invention, it is preferable that in a PCT desorption curve at 30°C, a hydrogen desorption pressure P_{b3} at a hydrogen content of +0.10 wt% from a starting point, with an intersection of an equilibrium pressure of 0.01 MPa and the desorption curve as the starting point, and a hydrogen desorption pressure P_{b4} at a hydrogen content of +0.30 wt% from the starting point satisfy the following relation: 1.2 ≤ [0.2/{log₁₀(P_{b4}) - log₁₀(P_{b3})}]. This is because, when the PCT curve has the above feature, a larger amount of hydrogen can be desorbed when desorption is terminated at a predetermined pressure. Therefore, a very suitable hydrogen storage material can be obtained in which the stored hydrogen can be effectively utilized without hydrogen remaining in the alloy. In the present application, the value of [0.2/{log₁₀(P_{b4}) - log₁₀(P_{b3})}] is used as an index indicating whether the hydrogen desorption ability is good or not, and the value is referred to as hydrogen desorption ability index for the sake of convenience.

It is particularly preferable that all of the alloys of the present invention constituting the hydrogen storage material of the present invention satisfy the above relationship in the PCT curve, however, it is also permissible that only some of the alloys satisfy the above relationship.

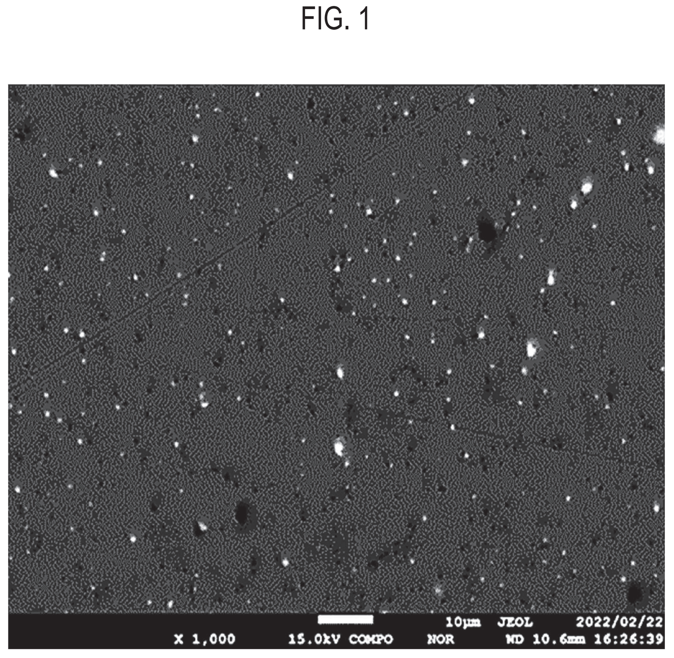

The main phase of the TiFe-based alloy is a phase mainly having a TiFe phase (which may contain a substitution element such as Mn). Hereinafter, "the main phase of the TiFe-based alloy" may be simply referred to as "the main phase". The phase size of the main phase is preferably 200 µm or less, and more preferably 150 µm or less. The phase size of the main phase is preferably 2 µm or more. The rare-earth-element-enriched phase (the R-enriched phase) consists mainly of the rare earth element, and may contain C (carbon) and small amounts of other additive elements. When observed in the above-described field of view of the cross section, the R-enriched phase is dispersed in the main phase as minute islands having shapes like those shown in Fig. 1, and the phase size is in the range of 0.1 µm or more and 10 µm or less. Here, the phase size is obtained by measuring the major and minor axes of each phase particle and calculating (major axis + minor axis)/2.

In the case where the alloy of the present invention contains C (carbon), C is relatively abundant in the R-enriched phase. Although the detailed mechanism is not clear, it is presumed that incorporation of C into the R-enriched phase, which is dispersed as described above, results in an increased equilibrium pressure during hydrogen absorption and desorption, and eliminates two-stage plateaus in the PCT curve.

Next, a method for producing the hydrogen storage material of the present invention is described. First, examples of methods for preparing the alloy include strip casting, such as single-roll, twin-roll, or disk methods, and mold casting.

For example, in the strip casting method, source materials blended to obtain a desired alloy composition are prepared. Next, in an inert gas atmosphere such as Ar, the blended source materials are heated and melted into an alloy melt, and then the alloy melt is poured onto a copper-made, water-cooled roll and is rapidly cooled and solidified to obtain an alloy cast piece. As the copper-made, water-cooled roll, also a roll having a coating layer containing Ni, Cr, other elements, etc. on its surface can be used. The coating layer may be formed of, for example, a metal, an alloy, a ceramic, or the like.

In the mold casting method, an alloy melt is obtained in a similar manner, and then the alloy melt is poured into a water-cooled copper mold and is cooled and solidified to obtain an ingot. The strip casting method and the mold casting method differ in cooling rate. In general, the strip casting method is preferable when it is attempted to obtain an alloy having less segregation and a uniform composition distribution. Although the alloy of the present invention is an alloy in which minute R-enriched phases are dispersed in the TiFe-based main phase, it is preferable that the composition distribution be uniform in the TiFe-based main phase excluding the R-enriched phases. Therefore, the strip casting method is a preferred method also in the present invention. Further, since the TiFe-based alloy is very hard and is not easy to mechanically pulverize, the strip casting method is preferable also in this respect.

The cooling rate of the alloy melt when producing an alloy cast piece is controlled as follows to regulate the number of R-enriched phases having phase sizes of 0.1 µm or more and 10 µm or less to the range of the present invention mentioned above. That is, the cooling rate from the cooling start temperature of the alloy melt (for example, the temperature at the time point when the molten metal comes into contact with the roll) to 950°C is set to 300°C/sec or more. The cooling rate is set to preferably 700°C/sec or more, more preferably 1000°C/sec or more, and particularly preferably 1500°C/sec or more. The upper limit of the cooling rate is not particularly specified, but is practically about 50000°C/sec or less. The cooling start temperature of the alloy melt varies depending on the alloy composition, but is in the range of about 1300 to 1500°C. The cooling rate at less than 950°C is not particularly limited. For example, in the case of the strip casting method, after being peeled off from the roll, the strip may be allowed to cool to, for example, 100°C or lower, and then be collected.

The alloy cast piece obtained by the above cooling is preferably subjected to heat treatment in order to make the composition distribution of the main phase portion of the TiFe-based alloy more uniform. The heat treatment can be performed in the range of 700°C or higher and 1250°C or lower in an inert gas atmosphere such as Ar. The heat treatment temperature is preferably 900°C or higher and 1150°C or lower, and the heat treatment time is 0.35 hours or more and less than 48 hours, and preferably 2 hours or more and less than 24 hours. This heat treatment can be performed in a known heat treatment furnace capable of controlling the atmosphere. For example, a chamber type batch furnace, a continuous furnace, a rotary furnace, such as a rotary kiln furnace may be used.

Next, the alloy cast piece obtained by casting is pulverized to obtain an alloy powder. The pulverizing can be performed using a known pulverizer. The particle size of the alloy powder is preferably 800 µm or less, and more preferably 500 µm or less. The lower limit of the particle size of the alloy powder does not particularly need to be specified, but is practically about 0.1 µm. Here, the particle size of the alloy powder refers to a diameter measured with a sieve shaker (the RO-TAP type).

In addition, the obtained alloy cast piece or alloy powder may be subjected to mechanical alloying treatment using a ball mill or the like to further refine the alloy structure. By performing the treatment, the initial activation and hydrogen absorption/desorption characteristics can be improved.

The hydrogen storage material of the present invention may be the alloy itself, prepared in powder form as described above, or alternatively, it may be a composite obtained by mixing alloy powder with resin, etc. and molding the mixture into an arbitrary shape, for example, a granular shape, or it may be a composite in which alloy powder is immobilized on a temperature-controllable material. In this case, the resin functions as a binder of the alloy powder. The mixing can be performed by a known method. For example, the mixing can be performed using a mortar, or using a rotary mixer such as a double cone type or a V type, or an agitation mixer such as a blade type or a screw type, and similar equipment. It is also possible to mix the alloy cast piece and the binder while pulverizing them using a pulverizer such as a ball mill or an attritor mill.

A hydrogen storage container of the present invention includes the hydrogen storage material produced as described above, and the material and shape of the container may be selected from known ones.

A hydrogen supply apparatus of the present invention includes the hydrogen storage container described above. And other components may be selected from known ones.

### Examples

The present invention will now be described in detail using Examples and Comparative Examples, but the present invention is not limited thereto. In the description of the present Examples, all of the alloys of the present invention in the Examples and the alloys outside the scope of the present invention in the Comparative Examples are referred to as "alloys". Further, an alloy obtained as a cast piece by the strip casting method is referred to as an alloy cast piece, and a product obtained by pulverizing the alloy cast piece is referred to as an alloy powder.

### (Example 1)

Source material metals were weighed so that the elemental composition of the resulting alloy would correspond to the composition shown in Table 1, and were melted in an argon gas (Ar) atmosphere in a high-frequency melting furnace to form an alloy melt. Subsequently, with the pouring temperature of the melt set to 1450°C, the melt was rapidly cooled and solidified by the strip casting method using a single-roll casting apparatus equipped with a water-cooled copper roll, and an alloy cast piece having a thickness variation of about 0.1 to 0.4 mm and an average thickness of 0.25 mm was obtained. The cooling start temperature of the alloy melt, that is, the temperature at the time when the alloy melt came into contact with the water-cooled copper roll was about 1400°C. There was a difference in cooling rate between the roll contact side and the non-contact side of the alloy melt, and the cooling rate during from 1400°C to 950°C was between 2000°C/sec and 3000°C/sec.

The alloy cast piece obtained as above was subjected to heat treatment by holding it at 1050°C for 6 hours in a heat treatment furnace under an Ar atmosphere. After the heat treatment, the alloy cast piece was embedded in an epoxy resin and cured, rough and fine polishing were performed using a wet polishing machine, and finally the polished surface was finished to a mirror-like surface to form an alloy cross section. That cross section was subjected to surface analysis (a COMP image, a mapping image of elements) at a magnification of 1000 times, an acceleration voltage of 15 kV, a current of 1 × 10⁻⁷ A, and a beam diameter of 1 µm, using an FE (field emission) type EPMA (trade name: JXA-8530F, manufactured by JEOL Ltd.). The number of R-enriched phase pieces having a phase size of 0.1 to 10 µm within a field of view of 85 µm × 120 µm in the COMP image was counted by visual observation. This count is referred to as the "number of pieces of the R-enriched phase". The results are shown in Table 1. Fig. 1 shows a copy of a COMP image of an alloy cross section.

In addition, the heat-treated alloy cast piece was pulverized using a stainless steel mortar, and alloy powder of 300 µm to 500 µm for alloy oxygen content measurement and a pulverization test, and alloy powder of 500 µm or less for PCT curve measurement were obtained using sieves with mesh sizes of 300 µm and 500 µm.

### [Measurement of alloy oxygen content]

The oxygen content of the obtained alloy powder having a particle size of 300 µm to 500 µm was measured using an oxygen nitrogen analyzer (ON836 manufactured by LECO Corporation). The results are shown in Table 1.

### [Pulverization Test]

A pulverization test of the obtained alloy powder of 300 µm to 500 µm was performed using a PCT measurement automatic high-pressure Sieverts' apparatus (manufactured by Fuse Technonet Co., Ltd.). About 5 g of the alloy powder was loaded into a sample chamber having a pressure accumulator, a piping section, and a sample loading section, and having a total volume of about 138 ml, and the following treatments (1) to (3) were performed.
(1) Evacuation is performed at 85°C for about 2 hours.
(2) After pressurization is performed at a hydrogen pressure of about 2.7 MPa, the temperature is switched to -20°C, and hydrogen is absorbed until the hydrogen pressure stabilizes.
(3) The operations of (1) to (2) are repeated three times, and then evacuation is performed at 85°C for about 5 hours to desorb hydrogen.

The treated alloy powder was classified using a sieve with a mesh size of 150 µm, and the oxygen content of the alloy powder of 150 µm or less was measured. In addition, the ratio (wt%) of the weight of the alloy powder of 150 µm or less to the weight of the alloy powder before the test was taken as the pulverization ratio. The results are shown in Table 1.

### [Measurement of hydrogen pressure-composition isotherm diagram (PCT curve)]

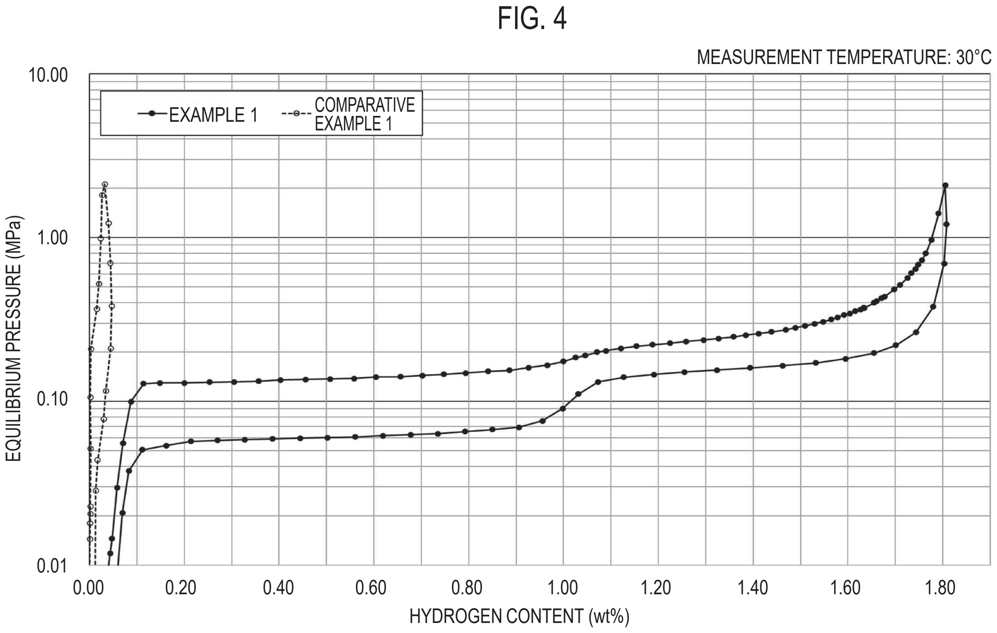

The hydrogen absorption/desorption characteristics of the obtained alloy powder of 500 µm or less were measured using an automatic high-pressure Sieverts' apparatus for PCT measurement (manufactured by Fuse Technonet Co., Ltd.), and PCT curves were obtained. Prior to the measurement, the sample chamber loaded with about 5 g of the alloy powder was evacuated at 85°C for about 2 hours, and then pressurized at a hydrogen pressure of about 2.7 MPa, and finally hydrogen was absorbed at 0°C until the hydrogen pressure stabilized. This series of operations was repeated three times to perform initial activation. Thereafter, evacuation was performed at 85°C for 2 hours (the degree of vacuum: about 0.5 to 2.5 Pa), and then the equilibrium pressures of absorption and desorption of hydrogen was measured while varying the hydrogen pressure between 0.01 MPa and about 2 MPa at a measurement temperature of 30°C. Fig. 4 shows hydrogen pressure-composition isotherm diagrams (PCT curves) at 30°C. In addition, the amount of hydrogen stored at an absorption pressure of 1.0 MPa was read from the PCT curve during hydrogen absorption. The results are shown in Table 2.

### [Plateau flatness]

From the obtained PCT curves, the plateau flatness values for hydrogen absorption and desorption were determined. For the absorption side, absorption pressures Pₐ₁ at 0.3 wt% of hydrogen and Pₐ₂ at 1.3 wt% of hydrogen were read from the PCT curve, and a value obtained by calculating log₁₀(Pₐ₂) - log₁₀(Pₐ₁) was used. For the desorption side, desorption pressures P_{b1} at 0.3 wt% of hydrogen and P_{b2} at 1.3 wt% of hydrogen were read from the PCT curve, and a value obtained by calculating log₁₀(P_{b2}) - log₁₀(P_{b1}) was used. The results are shown in Table 2.

### [Hydrogen desorption ability index]

From the obtained PCT curve, starting from the intersection of the equilibrium pressure of 0.01 MPa and the desorption curve as the starting point, the hydrogen desorption pressure P_{b3} at a hydrogen content of +0.10 wt% from this point and P_{b4} at a hydrogen content of +0.30 wt% from this point were read. Then, a value of [0.2/{log₁₀(P_{b4}) - log₁₀(P_{b3})}] (hydrogen desorption ability index) was determined. The results are shown in Table 2.

### (Examples 2 to 12)

An alloy cast piece and alloy powder of each Example were produced in a similar manner to Example 1 except that the elemental composition of the alloy finally obtained and the heat treatment conditions were changed as shown in Table 1. Then, surface analysis of an alloy cross section, counting of pieces of the R-enriched phase, measurement of an alloy oxygen content, a pulverization test, and measurement of a PCT curve were performed. In addition, the plateau flatness and the hydrogen desorption ability index for hydrogen absorption and desorption were determined from the PCT curves. The pouring temperature, the cooling start temperature, and the cooling rate of the alloy melt of these Examples were 1450°C, 1400°C, and between 2000°C/sec and 3000°C/sec, respectively, which were approximately the same as those in Example 1. The results are shown in Tables 1 and 2.

### (Comparative Examples 1 to 4)

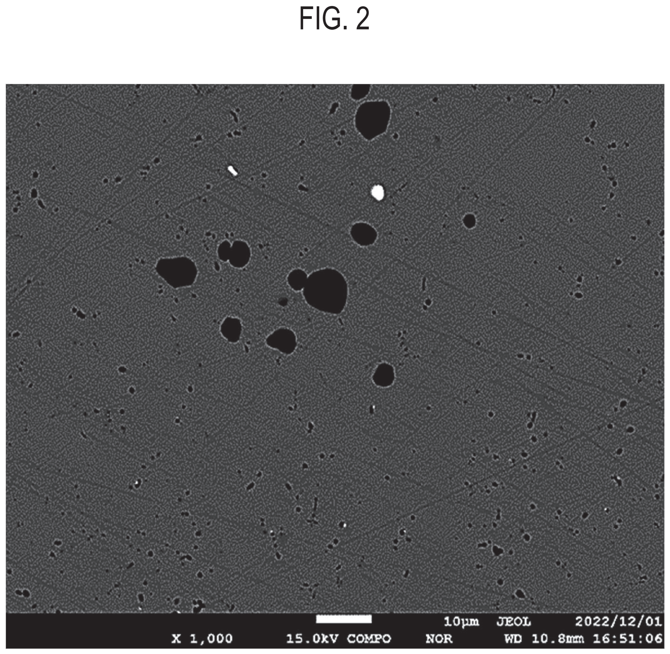

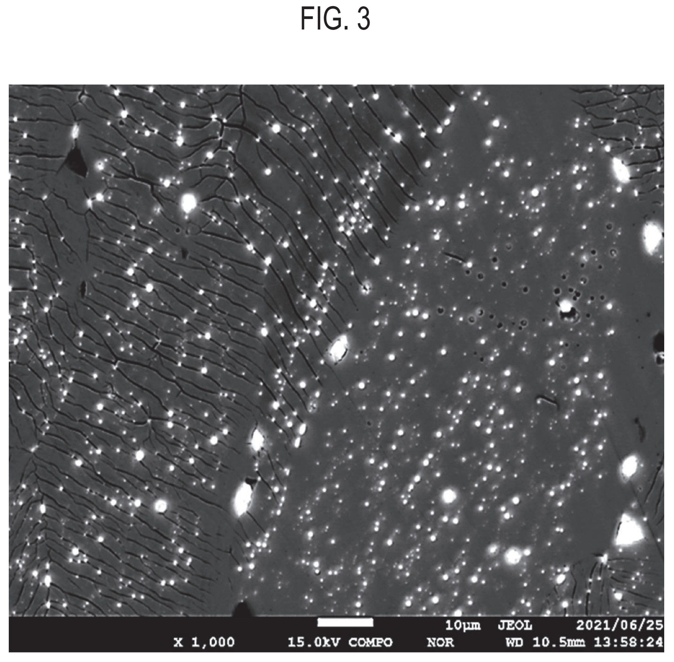

An alloy cast piece and alloy powder of each Comparative Example were produced in a similar manner to Example 1 except that the elemental composition of the alloy finally obtained and the heat treatment conditions were changed as shown in Table 1. Then, surface analysis of an alloy cross section, counting of pieces of the R-enriched phase, measurement of an alloy oxygen content, a pulverization test, and measurement of a PCT curve were performed. In addition, the plateau flatness and the hydrogen desorption ability index for hydrogen absorption and desorption were determined from the PCT curves. The pouring temperature, the cooling start temperature, and the cooling rate of the alloy melt of these Comparative Examples were 1450°C, 1400°C, and between 2000°C/sec and 3000°C/sec, respectively, which were approximately the same as those in Example 1. The results are shown in Tables 1 and 2. Fig. 2 shows a copy of a COMP image of an alloy cross section of Comparative Example 1, and Fig. 3 shows a copy of a COMP image of an alloy cross section of Comparative Example 3.

**[Table 1]**

| | Composition (molar ratio) | | | | | | | | | | | | Heat treatment | Number of pieces of R-enriched phase | Oxygen content (ppm) | Oxygen content after pulverization test (ppm) | Pulverization ratio (wt%) |
|---|---|---|---|---|---|---|---|---|---|---|---|---|---|---|---|---|---|
| | Ti | La | Ce | Zr | V | Fe | Mn | Cr | Sn | Mo | Al | C | | | | | |
| | 1-a-b | a | | b | | c | d | e | | | | f | | | | | |
| Example 1 | 0.995 | 0.005 | - | - | - | 0.761 | 0.147 | - | - | - | - | 0.015 | 1050°C×6h | 254 | 113 | 2560 | 12 |
| Example 2 | 0.995 | 0.005 | - | - | - | 0.761 | 0.140 | - | - | - | - | 0.015 | No heat treatment | 206 | 141 | 2350 | 10 |
| Example 3 | 0.994 | 0.006 | - | - | - | 0.759 | 0.145 | - | - | - | - | 0.015 | 1050°C×6h | 138 | 199 | 3760 | 12 |
| Example 4 | 0.995 | 0.005 | - | - | - | 0.771 | 0.149 | - | - | - | - | - | 1050°C×6h | 118 | 173 | 2950 | 28 |
| Example 5 | 0.987 | 0.005 | - | 0.008 | - | 0.820 | 0.100 | - | - | - | - | 0.005 | 1050°C×6h | 90 | 128 | 2720 | 20 |
| Example 6 | 0.976 | 0.004 | - | - | 0.020 | 0.716 | 0.196 | - | - | - | - | 0.004 | 1050°C×6h | 165 | 129 | 3410 | 95 |
| Example 7 | 0.995 | 0.005 | - | - | - | 0.773 | 0.141 | 0.010 | - | - | - | 0.002 | 1050°C×6h | 228 | 111 | 2980 | 45 |
| Example 8 | 0.996 | 0.004 | - | - | - | 0.769 | 0.138 | | 0.005 | 0.005 | - | 0.015 | 1050°C×6h | 300 | 143 | 2170 | 9 |
| Example 9 | 0.989 | 0.004 | - | 0.007 | - | 0.874 | 0.061 | - | - | - | - | 0.004 | 1050°C×6h | 53 | 97 | 3580 | 93 |
| Example 10 | 0.989 | 0.004 | - | 0.007 | - | 0.874 | 0.061 | - | - | - | - | 0.004 | 900°C×6h | 220 | 146 | 3680 | 85 |
| Example 11 | 0.996 | 0.004 | - | - | - | 0.763 | 0.134 | 0.004 | - | - | 0.011 | 0.002 | 1050°C×6h | 190 | 143 | 2990 | 41 |
| Example 12 | 0.997 | 0.003 | - | - | - | 0.772 | 0.151 | - | - | - | - | 0.015 | 1050°C×6h | 48 | 118 | 2130 | 7 |
| Comparative Example 1 | 0.999 | 0.001 | - | - | - | 0.775 | 0.148 | - | - | - | - | 0.013 | 1050°C×6h | 8 | 506 | Not measurable* | 0 |
| Comparative Example 2 | 1.000 | - | - | - | - | 0.788 | 0.155 | - | - | - | - | 0.014 | 1050°C×6h | 0 | 2550 | Not measurable* | 0 |
| Comparative Example 3 | 0.971 | 0.005 | 0.024 | - | - | 0.828 | 0.104 | - | - | - | - | - | 1050°C×6h | 690 | 573 | 7080 | 22 |
| Comparative Example 4 | 0.945 | 0.015 | 0.040 | - | - | 0.789 | 0.152 | - | - | - | - | - | 1100°C×6h | 780 | 762 | 7720 | 28 |

| | | | | | | | | | | | | | | | | | |
|---|---|---|---|---|---|---|---|---|---|---|---|---|---|---|---|---|---|
| *Because there was no occurrence of measurement targets (150 µm or less) | | | | | | | | | | | | | | | | | |

**[Table 2]**

| | Composition (molar ratio) | | | | | | | | | | | | Heat treatment | Amount of hydrogen stored (wt%) | Plateau flatness during absorption | Plateau flatness during desorption | Hydrogen desorption ability index |
|---|---|---|---|---|---|---|---|---|---|---|---|---|---|---|---|---|---|
| | Ti | La | Ce | Zr | V | Fe | Mn | Cr | Sn | Mo | Al | C | | | | | |
| | 1-a-b | a | | b | | c | d | e | | | | f | | | | | |
| Example 1 | 0.995 | 0.005 | - | - | - | 0.761 | 0.147 | - | - | - | - | 0.015 | 1050°C×6h | 1.78 | 0.26 | 0.42 | 5.1 |
| Example 2 | 0.995 | 0.005 | - | - | - | 0.761 | 0.140 | - | - | - | - | 0.015 | No heat treatment | 1.78 | 0.47 | 0.49 | 1.6 |
| Example 3 | 0.994 | 0.006 | - | - | - | 0.759 | 0.145 | - | - | - | - | 0.015 | 1050°C×6h | 1.82 | 0.37 | 0.51 | 8.7 |
| Example 4 | 0.995 | 0.005 | - | - | - | 0.771 | 0.149 | - | - | - | - | - | 1050°C×6h | 1.83 | 0.24 | 0.42 | 9.2 |
| Example 5 | 0.987 | 0.005 | - | 0.008 | - | 0.820 | 0.100 | - | - | - | - | 0.005 | 1050°C×6h | 1.75 | 0.33 | 0.50 | 9.6 |
| Example 6 | 0.976 | 0.004 | - | - | 0.020 | 0.716 | 0.196 | - | - | - | - | 0.004 | 1050°C×6h | 1.84 | 0.35 | 0.51 | 8.7 |
| Example 7 | 0.995 | 0.005 | - | - | - | 0.773 | 0.141 | 0.010 | - | - | - | 0.002 | 1050°C×6h | 1.80 | 0.33 | 0.48 | 5.4 |
| Example 8 | 0.996 | 0.004 | - | - | - | 0.769 | 0.138 | | 0.005 | 0.005 | - | 0.015 | 1050°C×6h | 1.82 | 0.40 | 0.53 | 5.5 |
| Example 9 | 0.989 | 0.004 | - | 0.007 | - | 0.874 | 0.061 | - | - | - | - | 0.004 | 1050°C×6h | 1.79 | 0.38 | 0.57 | 7.0 |
| Example 10 | 0.989 | 0.004 | - | 0.007 | - | 0.874 | 0.061 | - | - | - | - | 0.004 | 900°C×6h | 1.64 | 0.37 | 0.51 | 5.3 |
| Example 11 | 0.996 | 0.004 | - | - | - | 0.763 | 0.134 | 0.004 | - | - | 0.011 | 0.002 | 1050°C×6h | 1.85 | 0.56 | 0.71 | 8.7 |
| Example 12 | 0.997 | 0.003 | - | - | - | 0.772 | 0.151 | - | - | - | - | 0.015 | 1050°C×6h | 1.79 | 0.28 | 0.39 | 7.6 |
| Comparative Example 1 | 0.999 | 0.001 | - | - | - | 0.775 | 0.148 | - | - | - | - | 0.013 | 1050°C×6h | *1 | *2 | | |
| Comparative Example 2 | 1.000 | - | - | - | - | 0.788 | 0.155 | - | - | - | - | 0.014 | 1050°C×6h | *1 | *2 | | |
| Comparative Example 3 | 0.971 | 0.005 | 0.024 | - | - | 0.828 | 0.104 | - | - | - | - | - | 1050°C×6h | 1.81 | 0.19 | 0.38 | 10.4 |
| Comparative Example 4 | 0.945 | 0.015 | 0.040 | - | - | 0.789 | 0.152 | - | - | - | - | - | 1100°C×6h | 1.62 | 0.23 | 0.39 | 3.7 |

| | | | |
|---|---|---|---|
| *1: | No hydrogen absorption | *2: | Unable to calculate |

As is apparent from the tables, the alloy of each Example has a low alloy oxygen content and a low alloy oxygen content after the pulverization test as compared with the alloys in the Comparative Examples, and thus is excellent in durability. It also has a sufficient pulverization ratio after the initial activation treatment, and therefore has good initial activation, and sufficient amount of hydrogen stored and hydrogen absorption/desorption characteristics.

## Claims

1. A hydrogen storage material comprising
an alloy of an elemental composition represented by Formula (1) below,
wherein, in a 1000 times magnified COMP image of a cross section of the alloy obtained by EPMA, 10 or more and 3000 or less pieces of a phase in which La is enriched, having a phase size of 0.1 µm or more and 10 µm or less, are present in a field of view of 85 µm × 120 µm of the COMP image,
[Chem. 1]
Ti_{(1-a-b)}LaₐM1_{b}Fe_{c}Mn_{d}M2ₑC_{f} (1)
wherein M1 represents at least one selected from the group consisting of V, Zr, Nb, and Ta, and M2 represents at least one selected from transition metal elements (excluding rare earth elements, M1, Ti, Fe, and Mn), Al, B, Ga, Si, and Sn; here, the rare earth elements include Sc and Y; and a is 0.0011 ≤ a ≤ 0.016, b is 0 ≤ b ≤ 0.20, c is 0.40 ≤ c ≤ 1.15, d is 0 ≤ d ≤ 0.40, e is 0 ≤ e ≤ 0.20, f is 0 ≤ f ≤ 0.07, and c + d + e is 0.60 ≤ c + d + e ≤ 1.20.

2. The hydrogen storage material according to claim 1, wherein
the alloy is pulverized and classified to have a particle size of 300 to 500 µm and an oxygen content of the alloy powder is 500 ppm or less.

3. The hydrogen storage material according to claim 1, wherein,
after an alloy powder obtained by pulverizing the alloy and classified to have a particle size of 300 to 500 µm is subjected to treatments (1) to (3) below, an oxygen content of an alloy powder having a particle size of 150 µm or less is 6000 ppm or less:
(1) evacuation is performed at 85°C for about 2 hours;
(2) after pressurization is performed at a hydrogen pressure of about 2.7 MPa, the temperature is switched to -20°C and hydrogen is absorbed until the hydrogen pressure stabilizes; and
(3) after the operations of (1) to (2) are repeated three times, evacuation is performed at 85°C for about 5 hours to desorb hydrogen.

4. The hydrogen storage material according to claim 1, wherein,
in a PCT absorption curve, which is a hydrogen pressure-composition isotherm diagram at 30°C,
the alloy satisfies a relational expression of 0 ≤ log₁₀(Pₐ₂) - log₁₀(Pₐ₁) ≤ 0.65
wherein Pₐ₁ is a hydrogen absorption pressure at a hydrogen content of 0.3 wt%, and Pₐ₂ is a hydrogen absorption pressure at a hydrogen content of 1.3 wt%.

5. The hydrogen storage material according to claim 1, wherein,
in a PCT desorption curve, which is a hydrogen pressure-composition isotherm diagram at 30°C,
the alloy satisfies a relational expression of 0 ≤ log₁₀(P_{b2}) - log₁₀(P_{b1}) ≤ 0.80
wherein P_{b1} is a hydrogen desorption pressure at a hydrogen content of 0.3 wt%, and P_{b2} is a hydrogen desorption pressure at a hydrogen content of 1.3 wt%.

6. The hydrogen storage material according to claim 1, wherein,
in a PCT desorption curve, which is a hydrogen pressure-composition isotherm diagram at 30°C,
the alloy satisfies a relational expression of 1.2 ≤ [0.2/{log₁₀(P_{b4}) - log₁₀(P_{b3})}]
wherein P_{b3} is a hydrogen desorption pressure at a hydrogen content of +0.10 wt% from a starting point, the starting point being defined as an intersection of an equilibrium pressure of 0.01 MPa and the PCT desorption curve, and P_{b4} is a hydrogen desorption pressure at a hydrogen content of +0.30 wt% from the starting point.

7. The hydrogen storage material according to any one of claims 1 to 6, wherein
the alloy is subjected to mechanical alloying treatment.

8. The hydrogen storage material according to any one of claims 1 to 6, wherein
the hydrogen storage material is formed of a composite in which the alloy and a resin are mixed.

9. A hydrogen storage container comprising
the hydrogen storage material according to any one of claims 1 to 6.

10. A hydrogen supply apparatus comprising
the hydrogen storage container according to claim 9.
